# EUROPÄISCHE PATENTSCHRIFT

(11) **EP 0 953 668 B1**
(45) Veröffentlichungstag und Bekanntmachung des Hinweises auf die Patenterteilung: **26.11.2003**
(21) Anmeldenummer: 99108371.8
(22) Anmeldetag: 29.04.1999
(51) Int. Cl.: D06F 37/30, H02K 7/10

(54) **Verfahren zur Montage eines Antriebsmotors bei einem Wäschebehandlungsgerät**
Method for mounting of a drive motor on a laundry treatment apparatus
Méthode pour l'assemblage du moteur d'entraînement d'un appareil de traitement du linge

(30) Priorität: 30.04.1998 DE 19819410
(43) Veröffentlichungstag der Anmeldung: 03.11.1999
(73) Patentinhaber: Miele & Cie. KG, 33332 Gütersloh (DE)
(72) Erfinder: Esch, Günther, 53937 Schleiden (DE); Jöbges, Helmut, 53937 Schleiden (DE); Kurth, Rolf, 53894 Mechemich (DE); Martin, Ulrich, 33378 Rheda-Wiedenbrück (DE); Rode, Peter Dr., 53881 Euskirchen (DE)

(56) Entgegenhaltungen:
- EP-A- 0 780 507
- WO-A-98/59102
- DE-A- 4 335 433
- DE-A- 4 335 966
- DE-A- 19 546 185
- DE-A- 19 724 930
- DE-A- 19 726 246
- DE-A- 19 755 537

## Beschreibung

Die Erfindung betrifft ein Verfahren zur Montage eines Antriebsmotors auf einer Trommelwelle bzw. auf einem Lagersitz zur Aufnahme von Lagern der Trommelwelle, welche mit einer Trommel eines Wäschebehandlungsgeräts wie einer Waschmaschine, einem Waschtrockner oder einem Trockner verbunden ist, wobei der Antriebsmotor einen mit der Trommelwelle lösbar zu verbindenden Permanentmagnet-Rotor und einen mit dem Lagersitz lösbar zu verbindenden Stator beinhaltet.

Aus der DE 43 35 966 A1 ist eine Waschmaschine mit einem Antriebsmotor der eingangs genannten Art bekannt, bei der ohne Verwendung des üblichen Zwischentriebs (Antriebsriemen, Riemenscheibe) die Wäschetrommel direkt angetrieben wird. Bei diesen Antrieben bildet der Rotor das Drehbewegungsübertragungsteil zur Trommel der Waschmaschine.

Bei der Herstellung von Waschmaschinen wird der Antriebsmotor meist als fertig montierte und geprüfte Baugruppe angeliefert und montiert, da in einem Waschmaschinenwerk in der Regel keine speziellen Montageeinrichtungen zur Komplettierung von Motorbaugruppen vorhanden und auch nicht gewünscht sind. Aus der DE 195 46 185 A1 ist eine Antriebsvorrichtung für Waschmaschinen bekannt, bei der dieser Umstand berücksichtigt wird und bei der der Antriebsmotor samt Lagersitz als Baugruppe vorgefertigt und anschließend anstelle eines sonst üblichen Guss-Tragsterns an die Rückwand des Laugenbehältersystems montiert wird. Hierzu ist der Stator mit einem steifen Tragteil verbunden und bildet mit diesem eine scheibenförmige Kammer, die den Rotor aufnimmt. Dieses Tragteil bildet zum Einen die Versteifung der Laugenbehälter-Rückwand und beinhaltet zum Anderen den Lagersitz der Trommelwelle. Zum Aufbau des Antriebsmotors müssen deshalb waschmaschinenspezifische Teile in den Stator integriert werden, was dessen Fertigung in einem auf motorspezifische Baugruppen ausgerichtetem Herstellungswerk erschwert (es müssen bspw. Gusselemente hergestellt werden, was ansonsten bei einer Motorfertigung nicht notwendig ist) und das Gewicht und das Volumen stark vergrößert, was wiederum bei einem Transport der Motor-Baugruppe vom Motorwerk zum Waschmaschinenwerk die Kosten erhöht.

Aus der eingangs genannten DE 43 35 966 A1 ist ein Antriebsmotor für Waschmaschinen bekannt, welcher einen mit der Antriebswelle lösbar zu verbindenden Permanentmagnet-Rotor und einen mit dem Lagersitz lösbar zu verbindenden Stator beinhaltet. Als Permanentmagnete werden bei einem solchen Rotor Hartferrite verwendet, die große magnetische Kräfte entwickeln und sehr spröde sind. Wird bei einem solchen Motor zuerst der Stator mit dem Lagersitz verbunden und anschließend der Rotor auf die Trommelwelle aufgesetzt, treten beim Positionieren des Rotors sehr hohe magnetische Kräfte auf, die den Rotor ruckartig auf den Stator ziehen. Dabei kann es schnell zum Verkanten des Rotors kommen, wodurch die Ferritmagnete am Stator anschlagen und absplittern. Die Splitter setzen sich dann im Luftspalt ab und führen zu starken Geräuschentwicklungen und schlimmstenfalls zur Zerstörung des Motors. Aus diesem Grund ist bei Montage von Rotor und Stator hohe Sorgfalt notwendig, welche ohne aufwendige Hilfsmittel und zusätzliche Fertigungszeiten nicht möglich ist. Die Einzelmontage bietet deshalb kein großserientaugliches Handling.

Der Erfindung stellt sich somit das Problem, ein Verfahren zur Montage eines Antriebsmotors bei einem Wäschebehandlungsgerät der eingangs genannten Art zu offenbaren, welches einfach automatisierbar ist und trotzdem nicht zur Beschädigung des Rotors führt.

Erfindungsgemäß wird dieses Problem durch Verfahren mit den Merkmalen des Patentanspruchs 1 gelöst. Vorteilhafte Ausgestaltungen und Weiterbildungen ergeben sich aus den nachfolgenden abhängigen Ansprüchen.

Die mit der Erfindung erreichbaren Vorteile bestehen darin, dass die Magnetkräfte innerhalb der Einheit geschlossen sind und sich deshalb beim Positionieren des Rotors auf der Trommetwelle nicht auswirken. So kann die Verbindung des Rotors mit der Trommelwelle ruckfrei und ohne Gefährdung der Ferritmagnete erfolgen. Ein weiterer Vorteil ergibt sich durch das Zusammenfügen des Rotors und Stators zu einer Einheit. Hierdurch wird das Volumen des Motors während des Transports verringert. Außerdem kann der Einbau der elektromagnetisch aktiven Teile des Motors in die Waschmaschine ohne Hilfsmittel erfolgen.

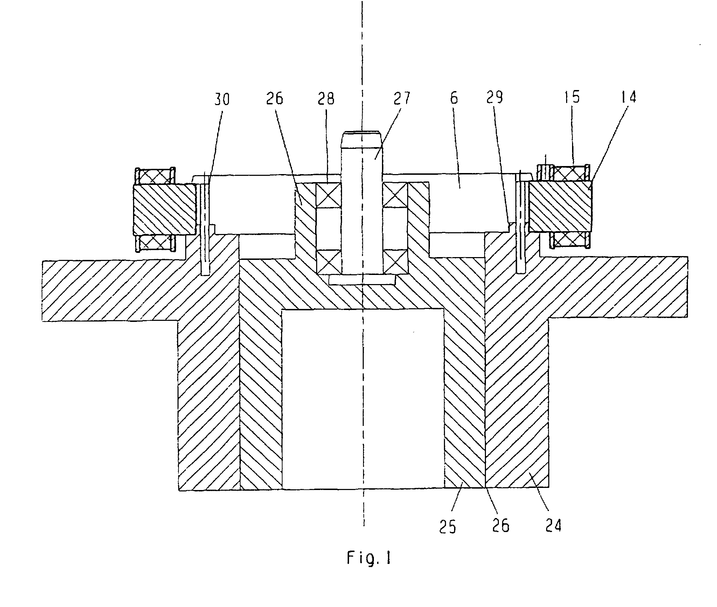

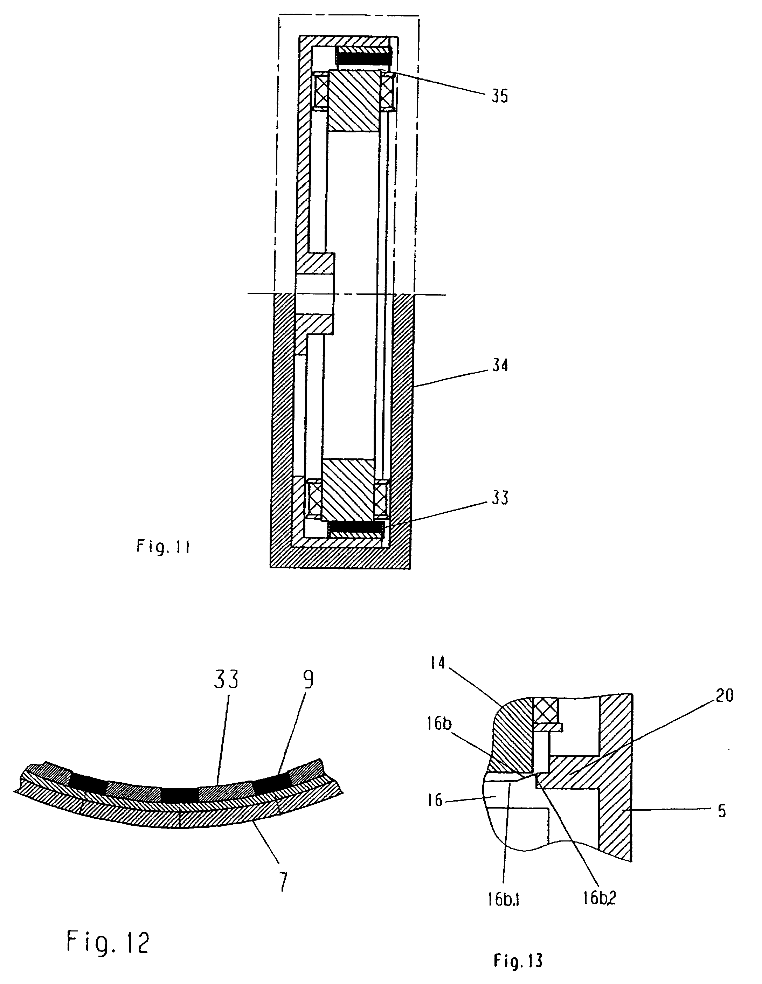

Ein Ausführungsbeispiel der Erfindung ist in den Zeichnungen rein schematisch dargestellt und wird nachfolgend näher beschrieben. Die Figuren 1 bis 10 zeigen die Montagefolge von der Bildung einer Transporteinheit bis zur Befestigung des Motors an einer Waschmaschine, wobei Rotor und Stator vorzentriert zusammengefügt sind. Die Figuren 11 bis 13 zeigen eine Ausführungsform eines Wäschebehandlungsgeräts, bei der der Stator während des Transports exzentrisch im Rotor gelagert wird.

Der Aufbau des Antriebsmotor ist beispielsweise aus der deutschen Patentanmeldung 19806258.3 bekannt und wird deshalb hier nur soweit dargestellt, als er für die Beschreibung des erfindungsgemäßen Montageverfahrens wichtig ist.

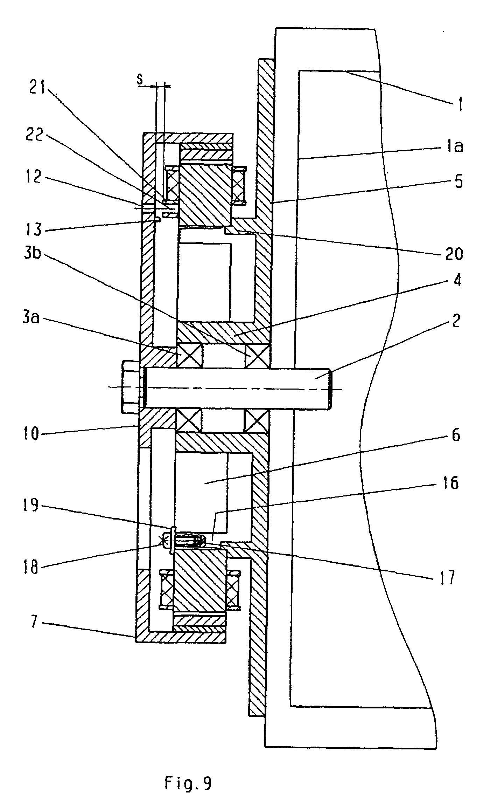

Die Waschmaschine, bei der der Antriebsmotor zum Einsatz kommen soll, besitzt eine fliegend gelagerte Trommel (1) zur Aufnahme von Waschgut (s. Figur 9). Zur Lagerung ist an der Rückwand (1a) der Trommel (1) eine zapfenförmige Trommelwelle (2) angeordnet, deren Befestigung durch bekannte Verbindungstechniken in beliebiger Weise erfolgen kann. Die Trommelwelle (2) wird von zwei untereinander beabstandeten Rillenkugellagern (3a,b) geführt. Zur Aufnahme der Lager (3a,b) dient ein Lagersitz in Form eines Lagergehäuses (4) in einem am Laugenbehälter der Waschmaschine befestigten Lagerkreuz (5). Im gebrauchsfertigen Zustand ist der Stator (6) des Antriebsmotors mit dem Lagerkreuz (5) und der Rotor (7) mit der Welle verbunden. Bei einer solchen Ausführungsform spricht man von einer Trommelwaschmaschine mit Direktantrieb.

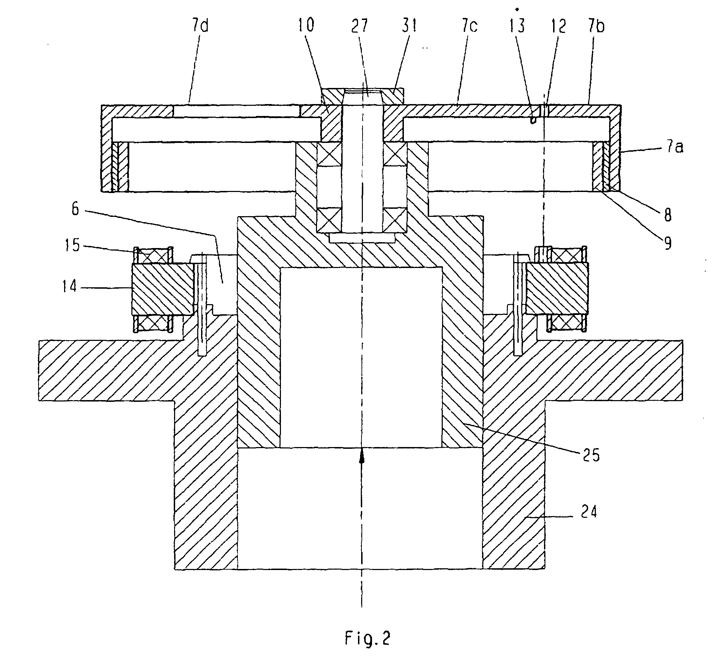

Der Rotor (7) (s. Figur 2) besteht aus einem topfförmigen Tiefziehteil oder einem Aluminiumspritzgussteil in Form eines Hohlzylinderabschnitts mit einer Mantelfläche (7a) und einer Deckfläche (7b) mit Speichen (7c) und Zwischenräumen (7d). Die Mantelfläche (7a) trägt einen ringförmigen Eisenrückschluss (8) und darauf befestigte Ferritmagnete (9) als Rotorpole. In der Deckfläche ist eine Nabe (10) angeordnet, die mit dem aus dem Lagergehäuse (4) herausragenden freien Ende der Trommelwelle (2) durch einen Schraubenbolzen (11) und eine Kerbverzahnung (nicht dargestellt) form- und kraftschlüssig und somit drehfest verbunden ist. Weiterhin weist der Rotor (7) in seinen Speichen (7c) Bohrungen (12) auf, unter denen Haltestege (13) angeordnet sind. Die Funktion der Bohrungen (12) und Haltestege (13) ist an anderer Stelle erklärt.

Der Stator (6) (s. Figur 1) besitzt in bekannter Weise ein Statorblechpaket (14), welches aus ringförmigen Blechen zusammengesetzt ist. Durch Einschnitte in den Blechen wird eine Zahnung ausgebildet, die die Statorwicklung (15) aufnimmt. Bei dem hier beschriebenen Motor ist diese Wicklung als Zahnwicklung ausgeführt. Zur Befestigung des Statorblechpakets (14) sind am Lagerkreuz (5) Befestigungsnocken (16) angeordnet, die eine Gewindebohrung (17) besitzen. Mit Hilfe von Befestigungsschrauben (18) und scheibenförmigen Klemmelementen (19) wird das Paket durch Flächenpressung kraftschlüssig mit dem Lagerkreuz (5) verbunden. Anstelle der Klemmbefestigung ist eine in den Zeichnungen nicht dargestellte Schraubbefestigung möglich. Hierzu müssen am Statorblechpaket (14) Befestigungsaugen mit Durchgangsbohrungen angeordnet sein. Zur Erleichterung der Montage und zur einfachen Zentrierung des Stators (6) ist am Lagerkreuz (5) ein umlaufender Zentrierrand (20) angeordnet. Alternativ sind einzelne Nocken (nicht dargestellt) mit Zentrierrändern denkbar. Die Befestigungsnocken (16) sind angeschrägt und bilden einen konischen Übergang (16a) in den Zentrierrand (20) (s. Figur 10). Hierdurch kann der Innenrand des Statorblechpakets (14) geführt bis in seine endgültige Position verschoben werden. Auf der dem Lagerkreuz (5) abgewandten Seite sind am Statorblechpaket (14) Zentriernocken (21) angeformt, die Gewindebohrungen (22) besitzen. Deren Funktion ist an anderer Stelle erklärt.

Um den Motor von einer ersten Fertigungslinie (Motorwerk) zu einer zweiten Fertigungslinie (Waschmaschinenwerk) versenden zu können und um die Verbindung von Motor und Trommel (1) bzw. Lagergehäuse (4) zu vereinfachen, werden durch eine Hilfsvorrichtung (23) (s. Figur 1) Stator (6) und Rotor (7) zentriert zusammengefügt und zu einer Transporteinheit fixiert. Die Hilfsvorrichtung (23) besteht im wesentlichen aus einer starren zylinderförmigen Halterung (24), in der ein Kolben (25) mit minimalem radialen Spiel geführt in axialer Richtung bewegbar ist. An dem nach außen gerichteten Ende des Kolbens (25) ist ein Lagersitz (26) angeformt, der eine drehbar gelagerte Welle (27) aufnimmt. Die Dimensionen des Lagersitzes (26), des äußeren Lagers (28) darin und der Welle (27) entsprechen im wesentlichen denen des Lagergehäuses (4), des äußeren Rillenkugellagers (3a) und der Trommelwelle (2). Die Bewegung des Kolbens (25) kann in bekannter Weise hydraulisch oder motorisch erfolgen, wobei eine in den Zeichnungen nicht dargestellte Positioniervorrichtung ein Verbleiben in vorgegebenen Stellungen ermöglicht.

An der Halterung sind Zentrierhilfen (29) angeordnet, die ein definiertes Ausrichten des Stators (6) ermöglichen, so dass dessen Achse mit der Achse der Welle deckungsgleich ist. Durch Spannvorrichtungen (30) kann der Stator (6) einfach und schnell in dieser Position fixiert werden. Alternativ hierzu sind andere Befestigungseinrichtungen (Schrauben, Klammern usw., nicht dargestellt) möglich.

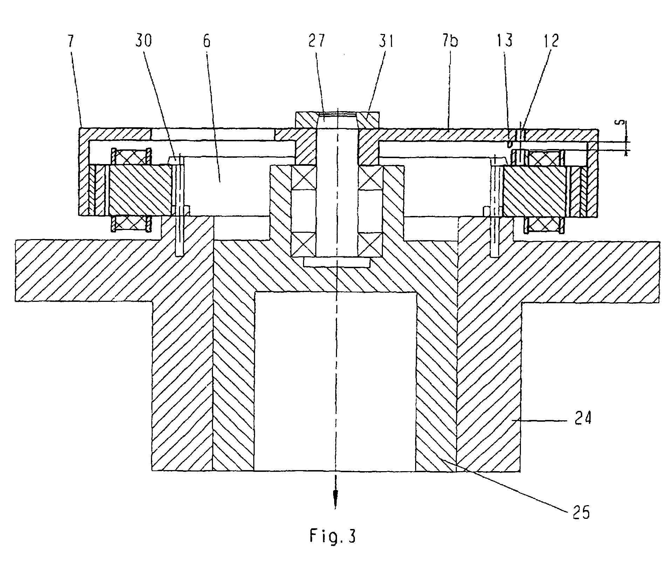

Die Montagefolge bis zur Bildung der Transporteinheit ist in den Figuren 1 bis 5 dargestellt. In einem ersten Schritt (Figur 1) wird zunächst der Stator (6) auf die Halterung (24) gesetzt, durch die Zentrierhilfen (29) positioniert und mit den Spannvorrichtungen fixiert (30). Anschließend (Figur 2) wird der Kolben (25) aus der Halterung (24) heraus in eine Position gefahren, in der ein sicheres Aufschieben des Rotors (7) auf die Welle (27) möglich ist, ohne dass dessen Ferritmagnete (9) den Stator (6) berühren. Die Nabe des Rotors (7) wird bis auf das äußere Lager (28) geschoben, und in dieser Position durch eine Mutter (31) verspannt. Nach der Befestigung des Rotors (7) wird der Kolben (25) in die Halterung (23) abgesenkt und nimmt eine Position ein, in der die Rotorpole (Ferritmagnete 9) sich gegenüber der Statorwicklung (15) befinden. Rotor (7) und Stators (6) befinden sich somit in einer Gebrauchslage, die dem endmontierten Zustand entspricht (Figur 3). Durch die Fixierung in radialer Richtung ist ein Kippen oder Verkanten des Rotors (7) bei dessen Positionieren über dem Stator (6) nicht möglich, es kann also nicht zu einer Beschädigung der Ferritmagnete (9) kommen. In dieser Position kann die Statorwicklung (15) elektrisch angeschlossen werden und es kann eine Vorprüfung des gesamten Motors erfolgen. Im Rahmen der Vorprüfung kann eine automatisch überwachte oder manuell durchgeführte Drehung des Rotors (7) in eine Position erfolgen, in der sich die Bohrungen (12) in der Deckfläche (7b) genau gegenüber den Gewindebohrungen (22) in den Zentriemocken (21) befinden.

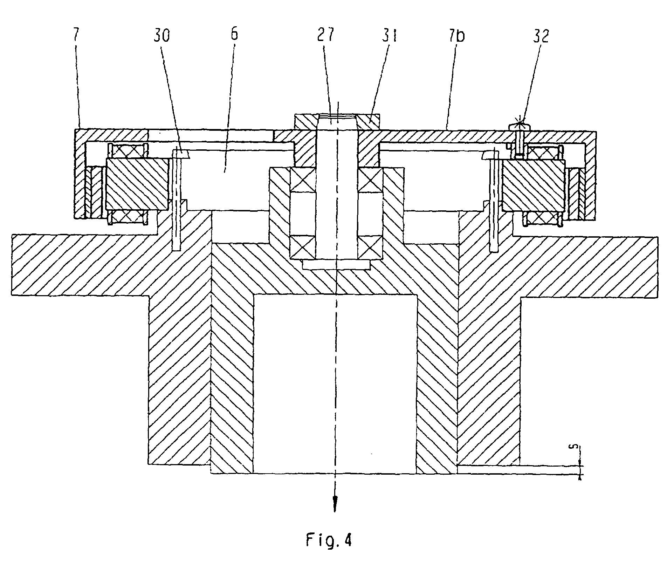

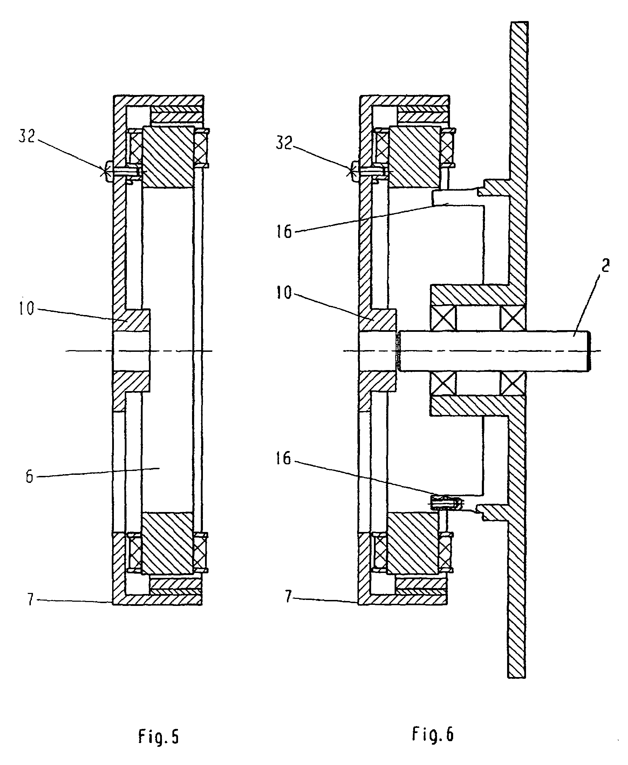

Nach der Vorprüfung wird der Kolben weiter um die Strecke s abgesenkt, bis die Deckfläche (7b) auf den Zentriemocken (21) aufliegt (Figur 4). Anschließend wird der Rotor (7) in dieser zentrierten Position durch Schrauben (32) fixiert, die durch die Bohrungen (12) geführt und von der Gewindebohrung (22) aufgenommen werden. Dann werden die Mutter (31) und die Spannvorrichtungen (30) gelöst und Stator (6) und Rotor (7) können von der Hilfsvorrichtung (23) als Transporteinheit heruntergenommen werden (Fig. 5). Die so ineinander verschachtelten Teile bilden für den Transport das geringst mögliche Transportvolumen, wobei die innerhalb der Einheit wirkenden magnetischen Kräfte nicht nach außen in Erscheinung treten können.

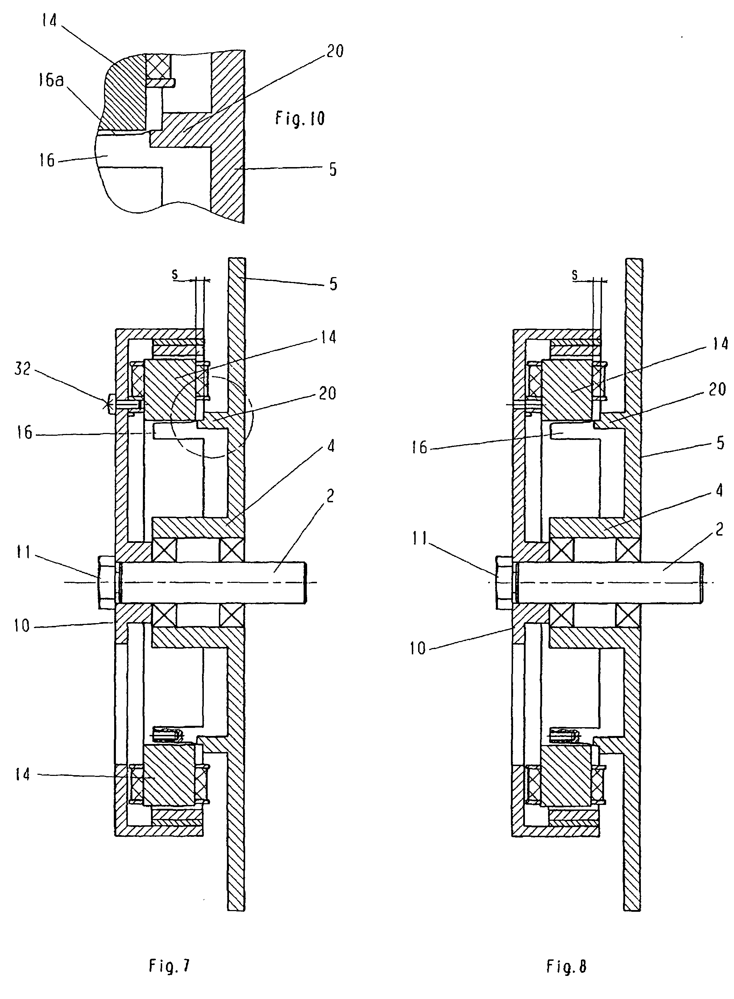

Zur Montage des Antriebsmotors am schwingenden Aggregat der Waschmaschine wird die Transporteinheit in das Waschmaschinenwerk gebracht. Dort wird zunächst der Innenrand des Statorblechpakets (14) auf die Befestigungsnocken (16) aufgesetzt und anschließend die gesamte Transporteinheit in eine Position geschoben, in der die Nabe des Rotors (7) die Trommelwelte (2) aufnimmt (Figur 6). Anschließend erfolgt die Sicherung des Rotors (7) mit Hilfe des Schraubenbolzens (11) (Figur 7). Hierauf können die Schrauben (32) entfernt werden (Figur 8). Die Befestigungsnocken (16) des Lagerkreuzes (5) halten den Stator (6) in seiner Position. Zur weiteren Sicherung ist das Spiel zwischen den Befestigungsnocken (16) und der Innenfläche des Statorblechpakets (14) geringer als der Luftspalt zwischen den Ferritmagneten (9) und der Außenfläche des Statorblechpakets (14) ausgelegt, so dass ein Kontakt der Magnete (9) mit dem Stator (6) bei diesem Montagezustand vermieden wird. Die Verbindung des Stators (6) mit dem Lagerkreuz(5) erfolgt durch Schrauben, die direkt durch Öffnungen im Stator (6) geführt werden (nicht dargestellt), oder mit zusätzlichen zum Verdrehschutz vorgesehenen Klemmelementen (19). Dabei wird das Paket (14) um die Wegstrecke s in Richtung der Trommel (1) auf den Zentrierrand (20) hin- und vom Rotor (7) wegbewegt und in dieser Position fixiert (Figur 9). Hierdurch ist gewährleistet, dass der Rotor (7) frei drehen kann, ohne an den Zentriemocken (21) des Stators (6) zu schleifen.

Am Lagerkreuz (5) und am Stator (6) können zusammen wirkende elektrische Kontaktiereinrichtungen (nicht dargestellt) angeordnet sein, so dass bei diesem letzten Montageschritt automatisch der elektrische Anschluss des Antriebsmotors erfolgt.

Die Figuren 11 und 12 zeigen einen Motor, bei dem die Lagerung des Stators (6) im Rotor (7) während des Transports exzentrisch erfolgt. Zur Bildung einer solchen Transporteinheit werden Rotor (7) und Stator (6) nach der in den Figuren 1 bis 4 dargestellten Montagefolge (Zentriertes Zusammenfügen - Vorprüfen - Absenken) von der Hilfsvorrichtung (23) gelöst. Nach dem Lösen fällt der Stator (6) aus seiner zentrierten Position in eine undefinierte exzentrische Position innerhalb des Rotors (7), wobei der axiale Versatz s beibehalten wird. In dieser Lage berühren sich Rotor (7) und Stator (6) an einer Seite, auf der gegenüberliegenden Seite wird ein Spalt (35) ausgebildet, der die doppelte Breite des Luftspalts d im Betriebszustand (zentrierte Position, s. Fig. 11) besitzt. Rotor (7) und Stator (6) weisen somit einen radialen Versatz d zur Betriebsposition auf. Um die Ferritmagnete (9) vor einem Kontakt mit dem Statorblechpaket (14) zu schützen, sind zwischen ihnen Stege (33) angeordnet, die 1/10 mm bis 3/10 mm über die nach innen gerichtete Oberfläche der Magnete (9) hinausragen. Alternativ dazu können die Ferritmagnete (9) vollständig in Kunststoff eingebettet sein (nicht dargestellt). Während des Transports wird die aus Rotor (7) und Stator (6) bestehende Transporteinheit von einem zweiteiligen Transportbehälter (34) umgeben, dessen untere Hälfte in Figur 11 dargestellt ist. Der Verbleib in dieser Stellung kann durch ein in den Spalt eingefügtes Klemmstück (nicht dargestellt) gesichert werden.

Die Befestigung des Rotors (7) an der Trommelwelle (2) und des Stators am Lagerkreuz (5) der Waschmaschine erfolgt in der in den Figuren 5 bis 9 dargestellten Montagefolge. Dabei entfällt jedoch das Lösen der in dieser Transporteinheit nicht benützten Schrauben (32). Um den Stator (6) am Lagerkreuz (5) innerhalb des Rotors (7) in eine zentrierte Position bringen und fixieren zu können, muss bei dieser Ausführungsform der konische Übergang (16b) vor dem Zentriemocken (20) derart dimensioniert sein, dass er mindestens den durch die exzentrische Lagerung während des Transports hervorgerufenen radialen Versatz d ausgleicht. Hierzu muss die Differenz zwischen dem kleinsten Radius (16b.1) und dem größten Radius (16b.2) des Übergangs (16b) das Maß d aufweisen (s. Figur 13).

## Patentansprüche

1. Verfahren zur Montage eines Antriebsmotors auf einer Trommelwelle (2) bzw. auf einem Lagersitz (4, 5) zur Aufnahme von Lagern (3a,b) der Trommelwelle (2), welche mit einer Trommel (1) eines Wäschebehandlungsgeräts wie einer Waschmaschine, einem Waschtrockner oder einem Trockner verbunden ist, wobei der Antriebsmotor einen mit der Trommelwelle (2) lösbar zu verbindenden Permanentmagnet-Rotor (7) und einen mit dem Lagersitz (4, 5) lösbar zu verbindenden Stator (6) beinhaltet,
**gekennzeichnet durch** folgende Verfahrensschritte:
• vorzentriertes Zusammenfügen von Rotor (7) und Stator (6) mittels einer Hilfsvorrichtung (23);
• Fixieren des Rotors (7) am Stator (6) zur Bildung einer Transporteinheit;
• Aufsetzen der Transporteinheit auf die Trommelwelle (2);
• Verbinden des Rotors (7) mit der Trommelwelle (2);
• Lösen des Stators (6) vom Rotor (7);
• Verbinden des Stators (6) mit dem Lagersitz (4, 5).

2. Verfahren nach Anspruch 1,
**dadurch gekennzeichnet,**
**dass** die Position des Stators (6) in der Transporteinheit gegenüber der Position des Stators (6) im endmontierten Zustand einen axialen Versatz (s) zum Rotor (7) hin aufweist.

3. Verfahren nach einem der Ansprüche 1 oder 2,
**dadurch gekennzeichnet,**
**dass** die elektrische Kontaktierung des Motors durch selbsttätige Verbindung von am Stator (6) und am Lagersitz (4, 5) angeordneten Kontaktvorrichtungen während der Bewegung des Stators (6) bzw. der Transporteinheit in Richtung des Lagersitzes (4, 5) erfolgt.

4. Verfahren nach einem oder mehreren der Ansprüche 1 bis 3,
**dadurch gekennzeichnet,**
**dass** nach dem vorzentrierten Zusammenfügen von Rotor (7) und Stator (6) und vor dem Fixieren des Rotors (7) am Stator (6) die vorzentrierte Position aufgegeben wird, so dass der Rotor (7) und der Stator (6) sich in der Transporteinheit auf einer Seite im Bereich der Magnete berühren.

5. Verfahren nach Anspruch 4,
**dadurch gekennzeichnet,**
**dass** das Fixieren des Rotors (7) am Stator (6) durch ein in den Spalt (35) zwischen Rotor (7) und Stator (6) eingebrachtes Klemmstück erfolgt.

6. Verfahren nach Anspruch 4 oder 5,
**dadurch gekennzeichnet,**
**dass** das Verbinden des Stators (6) mit dem Lagersitz unter Zuhilfenahme von Zentriermitteln erfolgt, welche am Lagerkreuz (5) des Lagersitzes (4, 5) angeordnet sind und welche mindestens zum Ausgleich eines radialen Versatzes zwischen Rotor (7) und Stator (6) in der Größe (d) des Luftspalts in Betriebsposition geeignet sind.

7. Verfahren nach einem oder mehreren der Ansprüche 1 bis 3,
**dadurch gekennzeichnet,**
**dass** das Fixieren des Rotors (7) am Stator (6) durch Schrauben (32) erfolgt.

## Claims

1. Method for mounting a drive motor on a drum shaft (2) or on a bearing seat (4, 5) for receiving bearings (3a,b) of the drum shaft (2), which is connected to a drum (1) of a washing treatment appliance, such as a washing machine, a washer drier or a drier, the drive motor containing a permanent magnet rotor (7) which is to be connected detachably to the drum shaft (2) and a stator (6) which is to be connected detachably to the bearing seat (4, 5),
**characterised by** the following method steps:
• precentred assembly of rotor (7) and stator (6) by means of an auxiliary device (23);
• fixing of the rotor (7) on the stator (6) in order to form a transport unit;
• placing of the transport unit upon the drum shaft (2);
• connection of the rotor (7) to the drum shaft (2);
• detachment of the stator (6) from the rotor (7);
• connection of the stator (6) to the bearing seat (4, 5).

2. Method according to claim 1,
**characterised in that**
the position of the stator (6) in the transport unit relative to the position of the stator (6) in the final mounted state has an axial offset (s) towards the rotor (7).

3. Method according to one of the claims 1 or 2,
**characterised in that**
the electrical contacting of the motor is effected by automatic connection of contact devices which are disposed on the stator (6) and on the bearing seat (4, 5) during the movement of the stator (6) or of the transport unit in the direction of the bearing seat (4, 5).

4. Method according to one or more of the claims 1 to 3,
**characterised in that**,
after the precentred assembly of rotor (7) and stator (6) and before fixing of the rotor (7) on the stator (6), the precentred position is abandoned so that, in the transport unit, the rotor (7) and the stator (6) are in contact on one side in the region of the magnets.

5. Method according to claim 4,
**characterised in that**
fixing of the rotor (7) on the stator (6) is effected by means of a clamping part which is introduced into the gap (35) between rotor (7) and stator (6) .

6. Method according to claim 4 or 5,
**characterised in that**
the connection of the stator (6) to the bearing seat is effected with the aid of centring means, which are disposed on the bearing cross (5) of the bearing seat (4, 5) and which are suitable at least for compensating for a radial offset between rotor (7) and stator (6) of the size (d) of the air gap in the operating position.

7. Method according to one or more of the claims 1 to 3,
**characterised in that**
fixing of the rotor (7) on the stator (6) is effected by means of screws (32).

## Revendications

1. Procédé pour le montage d'un moteur d'entraînement sur un arbre de tambour (2) ou encore sur un siège de palier (4, 5) destiné à recevoir des paliers (3a,b) de l'arbre de tambour (2), qui est assemblé à un tambour (1) d'un appareil de traitement du linge tel qu'un lave-linge, un lave-linge séchant ou un sèche-linge, le moteur d'entraînement contenant un rotor (7) à aimants permanents à assembler de manière amovible à l'arbre de tambour (2) et un stator (6) à assembler de manière amovible au siège de palier (4, 5),
**caractérisé par** les étapes suivantes :
• assemblage pré-centré du rotor (7) et du stator (6) au moyen d'un dispositif auxiliaire (23) ;
• immobilisation du rotor (7) sur le stator (6) pour former une unité de transport ;
• mise en place de l'unité de transport sur l'arbre de tambour (2) ;
• assemblage du rotor (7) à l'arbre de tambour (2) ;
• désassemblage du stator (6) du rotor (7) ;
• assemblage du stator (6) au siège de palier (4, 5).

2. Procédé selon la revendication 1, **caractérisé en ce que** la position du stator (6) dans l'unité de transport présente, par rapport à la position du stator (6) à l'état monté final, un décalage axial (s) en direction du rotor (7).

3. Procédé selon la revendication 1 ou 2, **caractérisé en ce que** la mise en contact électrique du moteur s'effectue par l'assemblage automatique de dispositifs de contact disposés sur le stator (6) et sur le siège de palier (4, 5) pendant le déplacement du stator (6) ou encore de l'unité de transport en direction du siège de palier (4, 5).

4. Procédé selon une ou plusieurs des revendications 1 à 3, **caractérisé en ce que**, après l'assemblage pré-centré du rotor (7) et du stator (6) et avant l'immobilisation du rotor (7) sur le stator (6), la position pré-centrée est abandonnée, de sorte que le rotor (7) et le stator (6) se touchent, dans l'unité de transport, sur un côté dans la région des aimants.

5. Procédé selon la revendication 4, **caractérisé en ce que** l'immobilisation du rotor (7) sur le stator (6) s'effectue par une pièce de serrage introduite dans l'interstice (35) entre le rotor (7) et le stator (6).

6. Procédé selon la revendication 4 ou 5, **caractérisé en ce que** l'assemblage du stator (6) au siège de palier s'effectue à l'aide de moyens de centrage qui sont disposés sur le croisillon de palier (5) du siège de palier (4, 5) et qui sont au moins aptes à compenser un décalage radial entre le rotor (7) et le stator (6) de la taille (d) de l'entrefer dans la position de service.

7. Procédé selon une ou plusieurs des revendications 1 à 3, **caractérisé en ce que** l'immobilisation du rotor (7) sur le stator (6) s'effectue par des vis (32).
